# EUROPEAN PATENT APPLICATION

(11) **EP 4 361 812 A1**
(43) Date of publication of application: **01.05.2024**
(21) Application number: 22841380.3
(22) Date of filing: 12.07.2022
(51) Int. Cl.: G06F 9/54

(54) **DATA PROCESSING METHOD, SYSTEM AND RELATED DEVICE**

(30) Priority: 14.07.2021 CN 202110792976; 20.10.2021 CN 202111221037
(71) Applicant: Huawei Technologies Co., Ltd., Shenzhen, Guangdong 518129 (CN)
(72) Inventor: LI, Chao, Shenzhen, Guangdong 518129 (CN); HE, Ke, Shenzhen, Guangdong 518129 (CN)
(74) Representative: Huawei European IPR
(86) International application number: PCT/CN2022/105221
(87) International publication number: WO 2023/284745

(57) **Abstract**

This application provides a data processing method and system, and a related device. The data processing system includes a processor and a computing core. The method includes: The processor receives metadata of first data and metadata of second data, where the second data is obtained by performing a first operation set on the first data, the first operation set includes at least two first operations, and memory addresses corresponding to elements at adjacent positions in each row of the second data are discontinuous. The processor identifies the first operation set based on the metadata of the second data, and determines a second operation set that matches the first operation set. The computing core obtains third data based on the first data and the second operation set, where memory addresses corresponding to elements at adjacent positions in each row of the third data are continuous. The foregoing method can reduce dependence on device hardware, and improve conversion efficiency and conversion performance of converting a discontinuous tensor into a continuous tensor in a scenario in which a plurality of view-class operations are combined.

## Description

This application claims priority to Chinese Patent Application No. 202110792976.7, filed with the China National Intellectual Property Administration on July 14, 2021 and entitled "DATA PROCESSING METHOD AND SYSTEM, AND RELATED DEVICE", and to Chinese Patent Application No. 202111221037.3, filed with the China National Intellectual Property Administration on October 20, 2021 and entitled "DATA PROCESSING METHOD AND SYSTEM, AND RELATED DEVICE", both of which are incorporated herein by reference in their entireties.

### TECHNICAL FIELD

The present invention relates to the field of processor technologies, and in particular, to a data processing method and system, and a related device.

### BACKGROUND

Pytorch is an open-source machine learning library for application programs such as natural language processing. A Pytorch framework supports performing an operation on a view-class framework of a source tensor to obtain a view tensor, to effectively reduce performance consumption caused by copying displayed tensor data. The source tensor and the view tensor share a memory.

An operator corresponding to the operation performed on the view-class framework may be referred to as a view-class framework operator, which mainly includes a reshape (reshape) operator and a discontinuous operator. The reshape operator includes framework operators such as view, view_as, squeeze, unsqueeze, and flatten. A corresponding view tensor generated based on the operators is referred to as a continuous tensor, where when elements in the view tensor are arranged in a row-major manner, corresponding index memories are consistent with those of the source tensor, and are continuously distributed. The discontinuous operator includes framework operators such as transpose (transpose), narrow (narrow), and expand (expand). A corresponding view tensor generated based on the operators is referred to as a discontinuous tensor, where when elements in the view tensor are arranged in a row-major manner, corresponding index memories are different from those of the source tensor, and are discontinuously distributed on a shared memory.

During current application, the discontinuous tensor usually needs to be converted into the continuous tensor. A current conversion solution is mainly to copy the discontinuous tensor from a device side (for example, a neural-network processing unit (neural-network processing unit, NPU) chip) to a host, and the host completes the conversion of the discontinuous tensor and then copies a converted discontinuous tensor back to the device side. In conclusion, in the current solution for converting the discontinuous tensor into the continuous tensor, conversion efficiency is low, a requirement on device hardware is high, and performance consumption is high.

Therefore, how to improve tensor conversion efficiency, reduce dependence on the device hardware in a conversion process, and improve device conversion performance is an urgent problem to be resolved currently.

### SUMMARY

Embodiments of the present invention disclose a data processing method and system, and a related device. Deduction is performed on a discontinuous scenario, especially recursive deduction is performed on a scenario in which a plurality of view-class operations are combined, so that discontinuous scenarios are extracted one by one, an operation that matches each discontinuous scenario is determined, and finally determined operations are sequentially performed to complete a conversion process. This can effectively improve conversion efficiency of converting a discontinuous tensor into a continuous tensor, reduce dependence on device hardware, and improve conversion performance.

According to a first aspect, this application provides a data processing method. The method is performed by a data processing system, the system includes a processor and a computing core. The method includes: The processor obtains metadata of first data and metadata of second data, where the second data is obtained by performing a first operation set on the first data, the first operation set includes at least two first operations, and memory addresses corresponding to elements at adjacent positions in each row of the second data are discontinuous. The processor identifies the first operation set based on the metadata of the second data, and determines each first operation in the first operation set. The processor determines a second operation set that matches the first operation set, where a second operation that matches each first operation in the first operation set exists in the second operation set. The computing core obtains third data based on the first data and the second operation set, where memory addresses corresponding to elements at adjacent positions in each row of the third data are continuous.

Optionally, the first data may be a source tensor, the second data may be a discontinuous tensor obtained by performing the first operation set on the source tensor, the third data may be a continuous tensor obtained by performing the second operation set on the source tensor, and the first operation set may be a discontinuous framework operator, for example, a transpose operator, a narrow operator, or an expand operator.

In this embodiment of this application, the processor analyzes metadata of a discontinuous tensor, and performs recursive deduction on a generation scenario of the discontinuous tensor, to determine a series of operations performed on the source tensor, and further determine a plurality of tensor boost engine (tensor boost engine, TBE) operators that match the series of operations. The computing core sequentially executes the plurality of TBE operators on the source tensor, to complete a process of converting the discontinuous tensor into the continuous tensor. This can improve conversion efficiency, reduce dependence on performance of an AI CPU of a chip, and effectively improve conversion performance.

With reference to the first aspect, in a possible implementation of the first aspect, the processor sequentially identifies, based on a preset priority, the first operations included in the first operation set; and the processor determines, based on a first operation identified each time, a feature scenario corresponding to the first operation, and sequentially puts feature scenarios into a scenario information stack.

In this embodiment of this application, when deducing and identifying the first operations in the first operation set in a preset priority order, for example, the processor may first identify a transpose operation, then identify a narrow operation, and finally identify a deform operation, and identify the first operations included in the first operation set one by one. In this way, combination interference between the plurality of first operations can be effectively reduced, and identification accuracy and identification efficiency can be improved.

With reference to the first aspect, in a possible implementation of the first aspect, the processor determines whether the metadata of the second data matches at least one piece of feature information of a to-be-identified first operation, and if the metadata of the second data matches the at least one piece of feature information of the to-be-identified first operation, the processor determines the to-be-identified first operation. The metadata of the second data includes a shape shape, a stride stride, and a memory offset memory_offset of the second data.

In the solution provided in this application, the processor performs identification by comparing the metadata of the second data with the feature information of the to-be-identified first operation, and does not need to perform strict one-to-one correspondence, and only a piece of or some of the feature information needs to be matched to determine the to-be-identified first operation. In this way, combination interference between the plurality of first operations can be effectively reduced, and identification efficiency can be improved.

With reference to the first aspect, in a possible implementation of the first aspect, the processor traverses an operator information library, where the operator information library includes a plurality of tensor boost engine TBE operators. For each first operation identified from the first operation set, the processor determines, as a second operation that matches the first operation, an operator that is in the operator information library and that has a same feature as the first operation, and sequentially puts second operations into an operator information stack.

In the solution provided in this application, after determining the series of first operations performed on the source tensor, the processor may further search the current operator information library for each first operation. When finding that a feature described by using metadata of an operator is the same as a feature corresponding to the operation, the processor may determine that the operator is of a same type as the operation, in other words, the operator is a TBE operator that matches the operation, to obtain the second operation set.

With reference to the first aspect, in a possible implementation of the first aspect, the processor delivers a conversion command to the computing core, where the conversion command includes the second operation set, and the conversion command indicates the computing core to calculate the first data based on the second operation set, to obtain the third data.

In the solution provided in this application, after finding, in the operator information library, the plurality of TBE operators that match the first operation set, the processor informs the computing core to execute the plurality of TBE operators on the source tensor, to obtain a continuous tensor, where index memories corresponding to elements at adjacent positions in each row of the tensor are continuous. In this way, a tensor conversion process can be completed without depending on the AI CPU, thereby reducing dependence on chip hardware.

With reference to the first aspect, in a possible implementation of the first aspect, the processor constructs fourth data, where metadata of the fourth data is the same as the metadata of the first data, and the fourth data and the first data share a memory. The computing core sequentially performs the second operations in the second operation set on the fourth data, to obtain the third data.

In the solution provided in this application, before the computing core performs calculation, the processor may obtain, based on a determined TBE operator, input parameter information required by the operator, where the input parameter information includes an input tensor. The input tensor may be a temporary continuous tensor constructed in a memory sharing manner, where metadata of the temporary continuous tensor is the same as metadata of the source tensor. After the temporary continuous tensor is constructed, the computing core can perform corresponding calculation, to ensure that the computing core can correctly execute a corresponding TBE operator, to complete a tensor conversion process.

With reference to the first aspect, in a possible implementation of the first aspect, the first operation set includes a transpose transpose operator, a narrow narrow operator, and an expand expand operator.

With reference to the first aspect, in a possible implementation of the first aspect, the system includes a host and a chip, the processor is located in the host, and the computing core is located in the chip.

With reference to the first aspect, in a possible implementation of the first aspect, the chip includes at least one of a neural-network processing unit NPU, a graphics processing unit GPU, a tensor processing unit TPU, and a deep learning processing unit DPU.

In this solution provided in this application, a process of performing recursive deduction on a generation scenario of a combination-class discontinuous tensor may be completed by the host in the data processing system, or may be completed by the chip in the data processing system. Regardless of whether scenario recursive deduction is completed by the host or the chip, the computing core eventually executes the TBE operator to convert the discontinuous tensor into the continuous tensor. In this way, data copying and hardware dependence on the AI CPU are reduced, and conversion efficiency and conversion performance are improved.

According to a second aspect, this application provides a data processing system. The system includes a processor and a computing core.

The processor is configured to: obtain metadata of first data and metadata of second data, where the second data is obtained by performing a first operation set on the first data, the first operation set includes at least two first operations, and memory addresses corresponding to elements at adjacent positions in each row of the second data are discontinuous; identify the first operation set based on the metadata of the second data, and determine each first operation in the first operation set; and determine a second operation set that matches the first operation set, where a second operation that matches each first operation in the first operation set exists in the second operation set.

The computing core is configured to obtain third data based on the first data and the second operation set, where memory addresses corresponding to elements at adjacent positions in each row of the third data are continuous.

It should be understood that a chip may also include a plurality of processors and computing cores, and the processors and the computing cores may concurrently execute respective tasks without affecting or interfering with each other. Quantities of processors and computing cores of the chip are not limited in this application.

With reference to the second aspect, in a possible implementation of the second aspect, the processor is specifically configured to: sequentially identify, based on a preset priority, the first operations included in the first operation set; and determine, based on a first operation identified each time, a feature scenario corresponding to the first operation, and sequentially put feature scenarios into a scenario information stack.

With reference to the second aspect, in a possible implementation of the second aspect, the processor is specifically configured to: determine whether the metadata of the second data matches at least one piece of feature information of a to-be-identified first operation, and if the metadata of the second data matches the at least one piece of feature information of the to-be-identified first operation, determine the to-be-identified first operation, where the metadata of the second data includes a shape shape, a stride stride, and a memory offset memory_offset of the second data.

With reference to the second aspect, in a possible implementation of the second aspect, the processor is specifically configured to: traverse an operator information library, where the operator information library includes a plurality of TBE operators. For each first operation identified from the first operation set, determine, as a second operation that matches the first operation, an operator that is in the operator information library and that has a same feature as the first operation, and sequentially put second operations into an operator information stack.

With reference to the second aspect, in a possible implementation of the second aspect, the processor is further configured to deliver a conversion command to the computing core, where the conversion command includes the second operation set, and the conversion command indicates the computing core to calculate the first data based on the second operation set, to obtain the third data.

With reference to the second aspect, in a possible implementation of the second aspect, the processor is further configured to construct fourth data, where metadata of the fourth data is the same as the metadata of the first data, and the fourth data and the first data share a memory. The computing core is further configured to perform the second operation in the second operation set on the fourth data, to obtain the third data.

With reference to the second aspect, in a possible implementation of the second aspect, the first operation set includes a transpose transpose operator, a narrow narrow operator, and an expand expand operator.

With reference to the second aspect, in a possible implementation of the second aspect, the processor is located in a host of the system, and the computing core is located in a chip of the system.

With reference to the second aspect, in a possible implementation of the second aspect, the chip includes at least one of a neural-network processing unit NPU, a graphics processing unit GPU, a tensor processing unit TPU, and a deep learning processing unit DPU.

According to a third aspect, this application provides a chip, including a processor and a computing core.

The processor is configured to: obtain metadata of first data and metadata of second data, where the second data is obtained by performing a first operation set on the first data, the first operation set includes at least two first operations, and memory addresses corresponding to elements at adjacent positions in each row of the second data are discontinuous; identify the first operation set based on the metadata of the second data, and determine each first operation in the first operation set; and determine a second operation set that matches the first operation set, where a second operation that matches each first operation in the first operation set exists in the second operation set.

The computing core is configured to obtain third data based on the first data and the second operation set, where memory addresses corresponding to elements at adjacent positions in each row of the third data are continuous.

According to a fourth aspect, this application provides a computing device, including the data processing system provided in any implementation of the first aspect.

According to a fifth aspect, this application provides a computer storage medium. The computer storage medium stores a computer program, and when the computer program is executed by a processor, the method provided in any one of the first aspect and the implementations of the first aspect can be implemented.

According to a sixth aspect, this application provides a computer program product, where the computer program includes instructions, and when the computer program is executed by a computer, the computer is enabled to perform the method provided in any one of the first aspect and the implementations of the first aspect.

### BRIEF DESCRIPTION OF DRAWINGS

To describe technical solutions in embodiments of the present invention more clearly, the following briefly describes the accompanying drawings for describing embodiments. It is clear that the accompanying drawings in the following descriptions show some embodiments of the present invention, and persons of ordinary skill in the art may still derive other drawings from these accompanying drawings without creative efforts.
FIG. 1 is a schematic diagram of tensor conversion according to an embodiment of this application;
FIG. 2 is a schematic diagram of a structure of a system according to an embodiment of this application;
FIG. 3 is a schematic diagram of splitting of a combination-class discontinuous scenario according to an embodiment of this application;
FIG. 4 is a schematic diagram of converting a combination-class discontinuous tensor to a continuous tensor according to an embodiment of this application;
FIG. 5 is a schematic flowchart of a data processing method according to an embodiment of this application;
FIG. 6 is a schematic diagram of a first operation set according to an embodiment of this application;
FIG. 7 is a schematic diagram of input parameter information of a transpose operator according to an embodiment of this application;
FIG. 8 is a schematic diagram of identification and extraction of a combination-class discontinuous scenario according to an embodiment of this application;
FIG. 9 is a schematic diagram of another tensor conversion process according to an embodiment of this application; and
FIG. 10 is a schematic diagram of a structure of a chip according to an embodiment of this application.

### DESCRIPTION OF EMBODIMENTS

The following clearly and completely describes technical solutions in embodiments of this application with reference to the accompanying drawings. It is clear that the described embodiments are merely some rather than all of embodiments of this application.

First, some terms and conventional technologies in this application are explained and described with reference to the accompanying drawings, to help persons skilled in the art have a better understanding.

Metadata is data for describing actual data, and is used to describe attribute information of the actual data. The attribute information may be a file name of the actual data, a storage address pointer of the actual data, or the like. For example, metadata of a tensor may be used to describe feature information such as a shape, a quantity of dimensions, and a format of the tensor. In addition, the metadata may further have a corresponding identifier identifying the metadata. The metadata and the corresponding identifier may form a key-value pair. Each key-value pair may include a key (key) and a value (value) corresponding to the key. The value is the metadata, and the key identifies the value.

A host may also be referred to as a client, is connected to a hard disk, a hard disk subsystem, or a file server, and can store data and a computer system for I/O access. The host may specifically include a physical machine, a virtual machine, a container, and the like. The host is configured to: communicate with a device and perform data processing. For example, the device is an application server, a multiprocessor machine, a workstation, or a personal computer.

The device is a processing chip that integrates a multiplication and addition module, an activation function module, a two-dimensional data calculation module, a decompression module, and the like. The device can accelerate calculation of a neural network, and effectively improve calculation efficiency of the neural network. For example, the processing chip is an NPU, a GPU, a TPU, or a DPU. The processing chip may include a plurality of processors and computing cores, which can concurrently execute respective tasks.

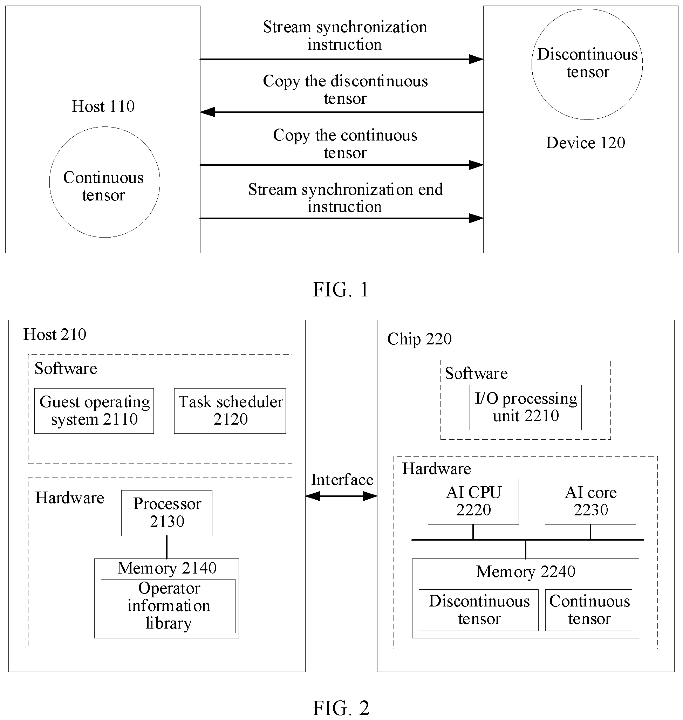

Currently, to reduce performance consumption caused by copying displayed tensor data, a Pytorch framework supports performing an operation on a view-class framework of a source tensor to obtain a view tensor, where an element in the source tensor and an element in the view tensor share a memory. However, during actual data processing, a discontinuous tensor usually needs to be converted into a continuous tensor, to further perform data processing. For example, in a compute unified device architecture (compute unified device architecture, CUDA), a memory address of each element in the discontinuous tensor is calculated. Depending on load (load) and store (store) instructions, the processing chip (for example, the GPU) may access an element at any memory position, and store the element in a specified connecting memory area, to ensure that when elements in the discontinuous tensor are arranged in a row-major manner, corresponding index memories are continuous. In this way, conversion of the discontinuous tensor is completed. However, many processing chips currently cannot efficiently copy data based on the foregoing data migration logic. For example, the NPU cannot complete conversion from the discontinuous tensor to the continuous tensor in the foregoing manner. For this type of processing chip, an operation of converting the discontinuous tensor into the continuous tensor usually needs to be completed with the help of the host. As shown in FIG. 1, a host 110 directly establishes a connection to a device 120 via a network or through a peripheral component interconnect express (peripheral component interconnect express, PCIe) interface. The host 110 may be a server, and the device 120 may be an NPU accelerator card inserted into the server. First, the host 110 delivers a stream synchronization instruction to the device 120, where the instruction hinders execution of all tasks in a current stream. After receiving the instruction, the device 120 copies a discontinuous tensor to the host 110. The host 110 calculates a memory address of each element in the discontinuous tensor based on information about the current discontinuous tensor, and then copies each element to a specified memory area according to a Load/Store instruction of a CPU. After completing the copy, the host 110 may convert the discontinuous tensor into a continuous tensor, then copy the continuous tensor to the device 120, and finally, deliver a stream synchronization end instruction to the device 120 to release a related resource. It can be learned that, during conversion of the discontinuous tensor, normal execution of another task is hindered. In addition, tensor data needs to be copied back and forth between the host and the device. Copy efficiency is low, performance consumption of the host is high, and performance of an entire conversion process is poor.

In addition, the discontinuous tensor may also be a tensor obtained through performing a plurality of view-class framework operations on the source tensor. The plurality of view-class framework operations overlap and interfere with each other, which increases difficulty in identifying and deducing a generation scenario of a discontinuous tensor of this type. An operation of converting the discontinuous tensor to a continuous tensor can be performed by using only a processor in a host or a processor in a device, a capability of a computing core in the device cannot be fully used, and overall conversion efficiency of the operation is low.

Based on the foregoing descriptions, this application provides a data processing method. A processor is used to deduce a generation scenario of a discontinuous tensor, and in particular, perform recursive deduction on a combination-class discontinuous scenario in which a plurality of view-class operations are combined, to determine an operation set that matches the combination-class discontinuous scenario, and an AI core sequentially performs the operation set to complete data re-copying, to convert the discontinuous tensor into a continuous tensor. This effectively improves conversion efficiency, reduces dependence on device hardware, especially an AI CPU, and improves conversion performance.

The technical solutions in embodiments of this application may be applied to any system in which conversion of the discontinuous tensor needs to be performed, and are particularly applicable to a scenario that is for a combination-class discontinuous tensor and with low dependence on the AI CPU.

FIG. 2 is a schematic diagram of a structure of a system according to this application. As shown in FIG. 2, the system includes a host 210 and a chip 220. The host 210 may include a hardware layer and a software layer. The software layer includes a guest operating system 2110 and a task scheduler 2120. The hardware layer includes hardware such as one or more processors a memory. The chip 220 may be at least one of a neural-network processing unit NPU, a graphics processing unit GPU, a tensor processing unit TPU, and a deep learning processing unit DPU. The chip 220 also includes a hardware layer and a software layer. The hardware layer includes hardware such as one or more processors (for example, AI CPUs 2220), one or more computing cores (AI cores 2230), and a memory. The software layer includes various processing units (for example, I/O processing units 2210) to process a procedure related to converting a discontinuous tensor into a continuous tensor. The host 210 and the chip 220 may be connected through an interface. In some embodiments, the chip 220 and the host 210 may be located on different devices. In some other embodiments, the chip 220 may be mounted on the host 210 in a card insertion manner.

The host 210 is configured to work with the chip to complete conversion of the discontinuous tensor. A processor 2130 may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, any conventional processor, or the like.

A memory 2140 may be configured to store an operator information library. The memory 2140 may include a read-only memory and a random access memory, or may be a volatile memory or a nonvolatile memory, or may include both a volatile memory and a nonvolatile memory. The nonvolatile memory may be the read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be the random access memory (random access memory, RAM), used as an external cache. By way of example but not limitative description, many forms of RAMs are available may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

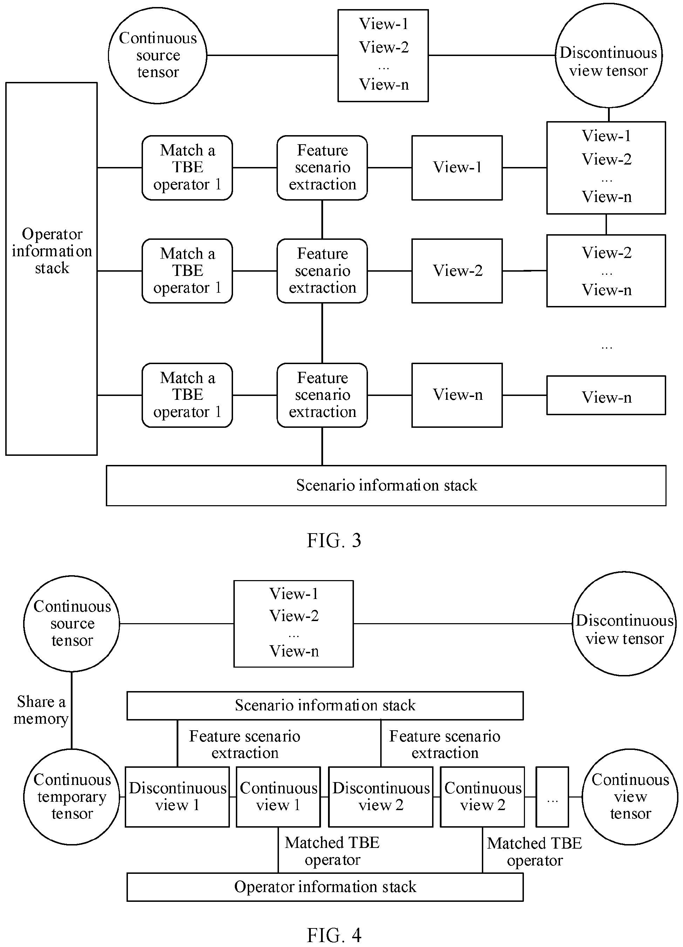

In a possible implementation, the task scheduler 2120 in the host 210 sends a tensor conversion task to the processor 2130, and the processor 2130 extracts metadata of the current discontinuous tensor from the memory 2140, where the metadata includes information such as a shape, a stride, and a memory offset of the discontinuous tensor. Then, the processor 2130 analyzes the metadata and performs deduction in a preset priority order. For example, whether stride information is non-monotonic may be first determined, and if the stride information is monotonic, it is determined that there is a transpose scenario. The scenario is extracted and put into a scenario information stack, and a first operation (namely, a transpose operation) corresponding to the apparatus scenario may be determined. Then, the processor 2130 traverses the operator information library in the memory 2140, finds a TBE operator of a same type as the first operation, learns of information required by the TBE operator, and puts the TBE operator into the operator information stack. Then, a residual scenario is identified and deduced again. In addition, a discontinuous scenario and a TBE operator that are obtained through deduction are respectively put in the scenario information stack and the operator information stack in sequence, until the residual scenario cannot be split. A deduction process is shown in FIG. 3. A discontinuous view tensor is obtained by performing n view-class operations on a source tensor, and then the discontinuous view tensor is identified in sequence in the preset priority order, and a view-class operation is identified each time, to extract a feature scenario and match a corresponding TBE operator, which is put in the scenario information stack and the operator information stack. Finally, the processor 2130 delivers an instruction to the chip 220 through a PCIe interface, constructs a temporary continuous tensor in the chip 220 in a manner of sharing a memory of the discontinuous tensor, and delivers the TBE operator in the operator information stack to the AI core 2230. The AI core 2230 sequentially schedules the TBE operator in the operator information stack to calculate the temporary continuous tensor, and re-copies each element in the discontinuous tensor in a memory 2240 to a specified area, to obtain a continuous tensor, where index memories corresponding to two adjacent elements in each row of the continuous tensor are continuous in the memory 2240. A specific process of converting a discontinuous tensor to a continuous tensor is shown in FIG. 4. After the temporary continuous tensor is constructed, a first single-operator discontinuous scenario is extracted from the scenario information stack, to reconstruct a first discontinuous scenario, and a corresponding TBE operator is invoked from the operator information stack to perform an operation of converting the discontinuous tensor to the continuous tensor. Until both the scenario information stack and the operator information stack are empty, reconstruction is stopped, and a result tensor is a target continuous view tensor.

It can be learned that, during tensor conversion, recursive deduction is performed on the generation scenario of the discontinuous tensor by using the known discontinuous tensor and the known source tensor, so that an operation corresponding to each discontinuous scenario can be obtained through deduction. Then, the matched TBE operator may be obtained through mapping from the operator information library based on the operation, and the TBE operator is put into an operator information stack. Finally, the AI core executes a plurality of TBE operators in the operator information stack to generate a continuous tensor without depending on performance of hardware like the AI CPU. This can effectively improve conversion efficiency and conversion performance.

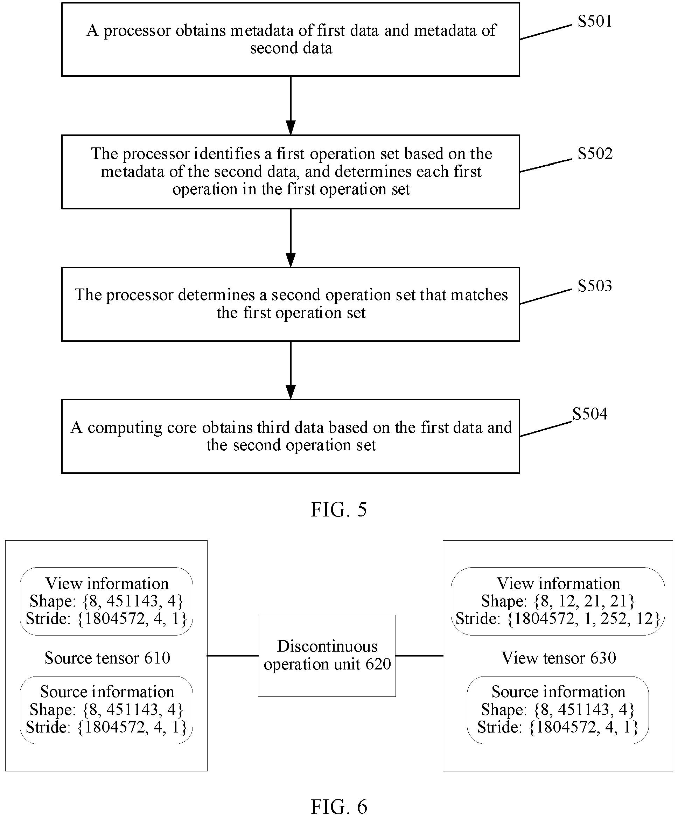

With reference to the schematic diagram of the chip shown in FIG. 2, the following describes a data processing method according to an embodiment of this application. FIG. 5 is a schematic flowchart of a data processing method according to an embodiment of this application. The method may be applied to the data processing system shown in FIG. 2. The method may specifically include the following steps.

S501: A processor obtains metadata of first data and metadata of second data.

Specifically, in this embodiment of this application, the first data may be source tensor data, and the source tensor is an n-dimensional data structure. A specific form of the source tensor includes a scalar, a vector, a matrix, and the like. For example, a 0^{th}-dimensional tensor is a scalar. Metadata of the source tensor is data for describing the source tensor, and includes a shape, a stride, a memory offset, and the like of the tensor. Correspondingly, the second data may be a discontinuous tensor. When elements in the discontinuous tensor are arranged in a row-major manner, memory addresses corresponding to elements at adjacent positions in each row are discontinuous.

In addition, the processor may be the processor 2130 in the host shown in FIG. 2. To be specific, scenario deduction in the following step S502 and operator mapping matching in the following step S503 are completed by the host. The processor may alternatively be the AI CPU 2220 shown in FIG. 2. To be specific, scenario deduction in step S502 and operator mapping matching in step S503 are completed by a chip. This is not limited in this application.

It should be noted that the second data is obtained by performing a first operation set on the first data, in other words, the discontinuous tensor is obtained by performing a series of first operations on the source tensor. The first operation is a discontinuous operation. For example, in a Pytorch architecture, the first operation is a corresponding operation of executing a discontinuous view-class framework operator on the source tensor. Optionally, the discontinuous view-class framework operator includes a transpose operator, a narrow operator, an expand operator, and the like.

For example, the first operation set includes a narrow operation, a deform operation, and a transpose operation. As shown in FIG. 6, a source tensor 610 includes view information and source information. The view information is consistent with the source information, shapes of the information are both {8, 451143, 4}, strides are both { 1804572, 4, 1}. The source tensor is a continuous tensor. A discontinuous operation unit 620 is used to perform the first operation set on the source tensor 610. To be specific, the narrow operation, the deform operation, and the transpose operation are sequentially performed on the source tensor, to generate a discontinuous view tensor 630. It can be learned that view information in the discontinuous view tensor 630 is inconsistent with the source information, and compared with the source tensor 610, in the discontinuous view tensor 630, the shape and the stride in the view information are apparently changed.

It should be understood that, when a discontinuous combination-class view-class framework operation is performed on the source tensor to obtain a view tensor, only metadata of the source tensor is changed, and the source tensor and the view tensor still share a memory. To be specific, an element in the source tensor and an element in the view tensor are the same, and occupy the same memory.

S502: The processor identifies the first operation set based on the metadata of the second data, and determines each first operation in the first operation set.

Specifically, after obtaining the metadata of the source tensor and the metadata of the discontinuous tensor, the processor determines, by analyzing each feature (for example, the foregoing shape, stride, or memory offset) of the discontinuous tensor, a series of discontinuous operations performed on the source tensor.

In a possible implementation, the processor sequentially identifies, based on a preset priority, the first operations included in the first operation set, and the processor determines, based on a first operation identified each time, a feature scenario corresponding to the first operation, and sequentially puts the feature scenario into a scenario information stack.

Specifically, because combination-class view-class operations overlap and interfere with each other, to reduce mutual impact between view-class operations and improve identification and deduction accuracy, when performing feature scenario identification, the processor may perform identification in a preset priority identification order. For example, the transpose operation is of a first priority, the narrow operation is of a second priority, and the deform operation is of a third priority. In this case, when performing scenario identification, the processor preferentially identifies a transpose scenario, then identifies a narrow scenario, and finally identifies a deform scenario.

It should be noted that, in a process of identifying each scenario, the processor needs to relax a determining condition corresponding to the scenario, not all determining conditions of the scenario needs to be satisfied, but only some of the determining conditions need to be satisfied. For example, there are three determining conditions of a feature scenario, and the metadata of the discontinuous tensor satisfies one of the determining conditions. In this case, it may be determined that the feature scenario exists. It is easy to understand that interference caused by scenario combination can be further eliminated by properly relaxing a determining condition of a scenario, thereby improving efficiency and accuracy of scenario identification.

For example, as shown in FIG. 6, when the discontinuous view tensor 630 and the source tensor 610 are known, the processor needs to deduce the discontinuous operation unit 620. The processor analyzes stride information of the discontinuous view tensor 630, and finds that the stride information is non-monotonic, that is, it may be determined that a transpose scenario and a transpose operation exist.

Similarly, another discontinuous scenario and discontinuous operation may also be deduced based on the foregoing logic. For example, when the discontinuous operation is narrow, the processor analyzes shape information, and finds that elements of some axes in the shape are reduced, and the processor may determine that a narrow scenario and a narrow operation exist.

After the processor completes the scenario identification, feature scenario extraction needs to be performed, that is, a combined discontinuous scenario is divided into two parts. A first part is a constructed identified scenario, and the other part is a residual scenario. The residual scenario may still be a combined discontinuous scenario. If the residual scenario is still a combined discontinuous scenario, further identification continues to be performed until the residual scenario cannot be further divided. The scenario information stack is constructed, and all extracted feature scenarios are sequentially put into the scenario information stack. Each feature scenario corresponds to one first operation, that is, corresponds to one discontinuous view operation.

S503: The processor determines a second operation set that matches the first operation set.

Specifically, the processor performs recursive deduction on a generation scenario of the discontinuous tensor. After each time the discontinuous operation is identified and the feature scenario is extracted, the processor needs to further determine a second operation that matches the discontinuous operation and the feature scenario, to be specific, determine whether there is a tensor boost engine (tensor boost engine, TBE) operator having a feature the same as a feature corresponding to the discontinuous operation and the feature scenario.

It should be understood that the TBE operator is compiled in a TBE language, and may be directly invoked and executed by a computing core AI core, to generate a continuous tensor. In this embodiment of this application, each discontinuous operation corresponds to one TBE operator. For example, the transpose operation corresponds to a transpose transpose operator, the slice operation corresponds to a narrow operator, and a deform operation corresponds to a broadcast operator.

The processor traverses a current operator information library to search for a TBE operator that matches the discontinuous operation. For example, in the scenario shown in FIG. 6, the first operation set includes the transpose operation, and a feature of the transpose operator is that stride information of a tensor is non-monotonic, shape and stride information of a specified axis of the tensor is replaced, a memory offset of the tensor is 0 and remains unchanged, and the stride information of the discontinuous view tensor is also non-monotonic. Therefore, the processor may determine that the TBE operator that matches the transpose operation is the transpose operator, and directly determine the transpose operator in the operator information library as an operator that matches the discontinuous operation (namely, the transpose operation).

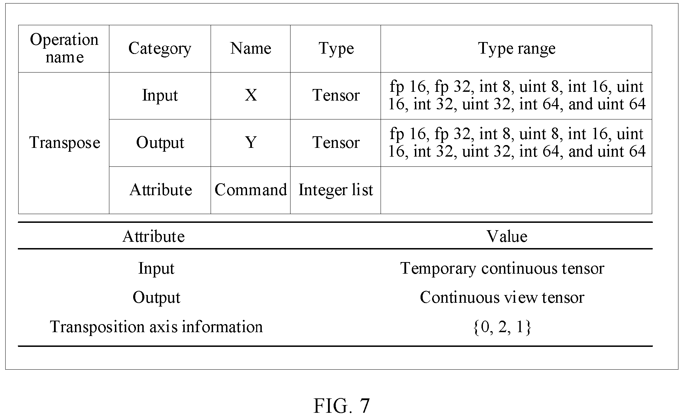

Further, after determining the TBE operator that matches the discontinuous operation, the processor may obtain input parameter information required by the TBE operator. For example, FIG. 7 is a schematic diagram of input parameter information required by the transpose operator. The input parameter information includes an input tensor, a result tensor, and transposed axis information. The input tensor is a temporary continuous tensor constructed in a memory sharing manner. The result tensor is used to receive an operator execution result, and is an empty continuous tensor newly created based on the view information of the discontinuous tensor. The transposed axis information is the same as transpose axis information corresponding to the transpose operation obtained through deduction.

After the processor determines a second operation corresponding to each first operation and finds a TBE operator that matches the second operation, the processor constructs an operator information stack, and sequentially puts TBE operators obtained through deduction into the operator information stack.

It should be noted that, after the processor determines the second operation, if no TBE operator that matches the second operation is found in the operator information library, a research and development personnel may compile a TBE operator that matches the second operation, and add the TBE operator to the operator information library. In this way, changing an operator at a software layer is implemented. This can effectively extend applicable scenarios, improve conversion flexibility, fully utilize performance of the AI core, and remove hardware dependence on the AI CPU.

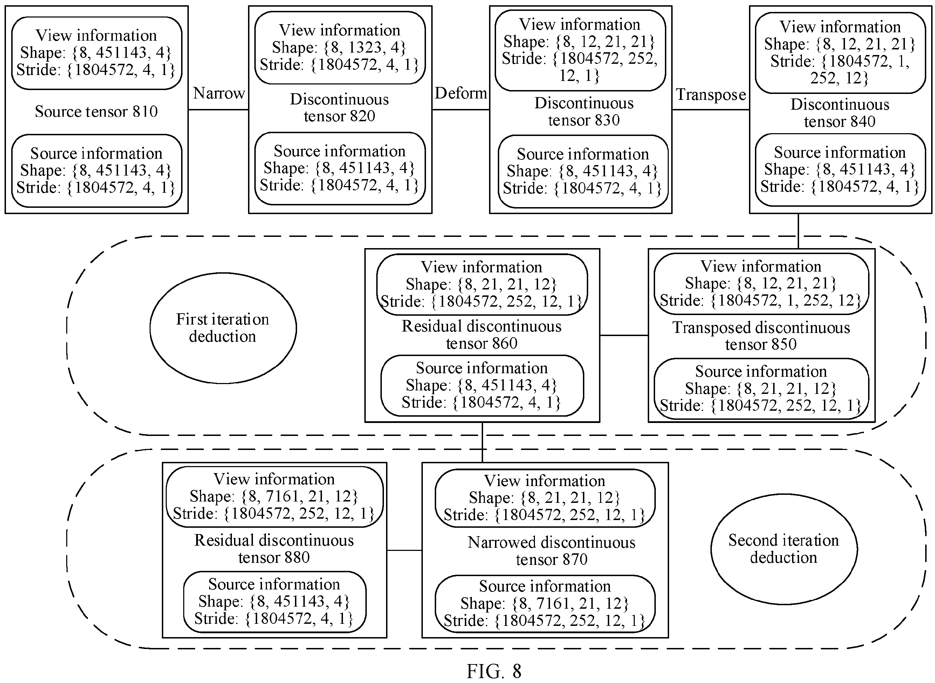

To further describe how to perform identification and extract a feature scenario in a combined discontinuous scenario, refer to FIG. 8. As shown in FIG. 8, a narrow operation is performed on a source tensor 810 to obtain a discontinuous tensor 820, then a deform operation is performed to obtain a discontinuous tensor 830, and a transpose operation is performed to obtain a discontinuous tensor 840. For the discontinuous tensor 840, view information and source information thereof are compared and analyzed, and a transpose scenario is first identified, and then first iteration deduction is performed, and for the discontinuous tensor 840, a transposed discontinuous tensor 850 and a residual discontinuous tensor 860 are constructed. The transposed discontinuous tensor 850 is put into a scenario information stack, a TBE operator that matches the transposed discontinuous tensor is found from an operator information library, and the TBE operator is put into an operator information stack. Then, a narrow operation is identified and second iteration deduction is performed. For the residual discontinuous tensor 860, a narrowed discontinuous tensor 870 and a residual discontinuous tensor 880 are constructed. The narrowed discontinuous tensor 870 is put into the scenario information stack, a TBE operator that matches the narrowed discontinuous tensor is found from the operator information library, and the TBE operator is put into the operator information stack. Because the residual discontinuous tensor 880 is not a combination-type discontinuous tensor, and is a deformed discontinuous tensor, in this case, iteration is stopped, and a deduction procedure ends.

It should be noted that a scenario construction policy complies with a fixed scenario refresh policy. For example, view information of the transposed discontinuous tensor 850 is consistent with view information of the discontinuous tensor 840, view information of the residual discontinuous tensor 860 is consistent with source information of the transposed discontinuous tensor 850, source information of the residual discontinuous tensor 860 is consistent with source information of the discontinuous tensor 840, and a scenario information refresh policy of each iteration is consistent.

S504: The computing core obtains third data based on the first data and the second operation set.

Specifically, after putting the TBE operators into the operator information stack, the processor delivers the operator information stack to the computing core AI core, and the computing core AI core sequentially executes the TBE operators in the operator information stack to obtain the continuous tensor.

It should be understood that the TBE operator exists in the operator information library in a form of a file, and the file records input parameter information of the TBE operator. The processor sends, to the computing core AI core, the file corresponding to the TBE operator. The computing core AI core executes the file corresponding to the TBE operator, to output the continuous tensor.

In a possible implementation, before delivering the TBE operator to the computing core AI core, the processor constructs a temporary continuous tensor in a manner of sharing a memory with the discontinuous view tensor. Metadata of the temporary continuous tensor is the same as the metadata of the source tensor, and the temporary continuous tensor and the source tensor share a memory. In other words, the temporary continuous tensor may be understood as restoration of the source tensor. Certainly, the temporary continuous tensor may be constructed in another manner. This is not limited in this application.

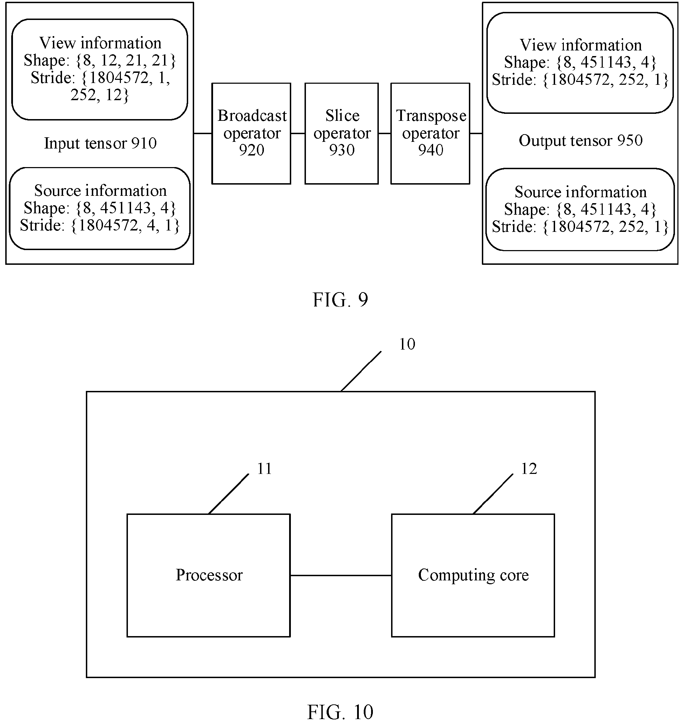

For example, in the scenario shown in FIG. 6, the processor constructs the temporary continuous tensor as an input tensor 910 based on the discontinuous view tensor 630. As shown in FIG. 9, the input tensor 910 is the same as the discontinuous view tensor 630. First, a deform scenario is extracted from the scenario information stack, and then a corresponding TBE operator, for example, a broadcast operator 920, is invoked from the operator information stack to calculate the input tensor 910 by using the broadcast operator, where a calculation result is a continuous tensor. Then, a narrow scenario is extracted from the scenario information stack, and a corresponding slice operator 930 is invoked from the operator information stack. For example, the slice operator performs calculation on a first calculation result, where a calculation result is also a continuous tensor. Finally, a transpose scenario is extracted from the scenario information stack, and a corresponding transpose operator 940 is invoked from the operator information stack. A second calculation result is calculated by using the transpose operator 940, and an output tensor 950 is obtained after the calculation. The output tensor 950 is a continuous tensor, that is, the output tensor 950 may also be referred to as a continuous tensor 950. For the continuous tensor 950, when elements in the tensor are arranged in a row-major manner, memory addresses corresponding to elements at adjacent positions in each row are continuous.

It should be noted that, when executing the TBE operator, the computing core AI core re-determines a memory area in a main memory, and sequentially migrates elements in the source tensor to the memory area in a memory read manner determined by using the continuous tensor, to ensure that when the continuous tensor is arranged in the row-major manner, memory addresses of adjacent elements are continuous.

It can be learned that, during execution of this embodiment of the present invention, the semantics of the view-class framework operator of the Pytorch framework does not need to be changed. A discontinuous operation is determined by performing recursive deduction on the generation scenario of the discontinuous tensor, to determine a TBE operator that matches the discontinuous operation. Finally, a computing core AI core is used to execute the TBE operator to generate the continuous tensors with memories are continuously distributed, without depending on hardware performance of the AI CPU. This improves conversion efficiency and conversion performance. In addition, the discontinuous operation is more flexible, and easy to be expanded at the software layer, and performance of the computing core AI core can be fully utilized.

It should be understood that the foregoing method is applicable to the Pytorch framework. In addition, for another AI framework that has discontinuous operations such as transpose and narrow, the method provided in the present invention may be used to perform scenario inverse deduction, to complete conversion of the discontinuous tensor based on a result obtained through inverse deduction, especially conversion of a combination-class discontinuous tensor.

It should be further understood that, the foregoing merely only an example in which a first operation set includes a narrow operation, a deform operation, and a transpose operation to describe how to perform recursive deduction on a combined scenario and how to complete, based on a deduction result, a process of converting a tensor into a continuous tensor. For a first operation set including another discontinuous operation, recursive deduction and tensor conversion may also be performed in the same method.

The data processing method provided in this application may be widely used in a Pytorch model training and deduction scenario, to significantly improve efficiency of model training and deduction, reduce time consumption of training, and accelerate model training. It may be understood that, if model training involves converting the discontinuous tensor into the continuous tensor, in this application, the AI core executes the TBE operator to perform memory copying to implement converting the discontinuous tensor into the continuous tensor. Compared with a process in which the host performs the memory copying to complete converting the discontinuous tensor into the continuous tensor, this method can reduce a round-trip data copying delay, and improve conversion efficiency, to effectively improve efficiency of model training and deduction, and generate a huge commercial value.

The foregoing describes in detail the method in embodiments of this application. To better implement the foregoing solutions in embodiments of this application, correspondingly, the following further provides a related device configured to implement the foregoing solutions.

FIG. 10 is a schematic diagram of a structure of a chip according to an embodiment of this application. As shown in FIG. 10, the chip 10 includes a processor 11 and a computing core 12. The chip 10 may be an NPU chip, a GPU chip, a TPU chip, or another AI chip. The chip may include a plurality of processors and computing cores, and the plurality of processors and computing cores may concurrently execute respective tasks. In FIG. 10, one processor and one computing core are used as an example. For functions of the chip described in this embodiment of the present invention, refer to related descriptions in embodiments of the present invention shown in FIG. 2 to FIG. 9. Details are not described herein again.

An embodiment of this application provides a computing device. The computing device may be the host in the data processing system shown in FIG. 2, and a chip is integrated into the host in a card insertion manner. The host and the chip may work together to perform related descriptions in embodiments of the present invention shown in FIG. 2 to FIG. 9. Details are not described herein again.

An embodiment of this application further provides a computer-readable storage medium, where the computer-readable storage medium stores a computer program, and when the program is executed by a processor, some or all of the steps recorded in any one of the foregoing method embodiments may be implemented.

An embodiment of this application further provides a computer program product, where when the computer program product runs on a computer or a processor, the computer or the processor is enabled to perform one or more steps in any one of the foregoing methods. When each component module of the foregoing device is implemented in a form of a software functional unit and sold or used as an independent product, the component module may be stored in the computer-readable storage medium.

In the foregoing embodiments, descriptions of each embodiment have different emphasis. For a part that is not described in detail in an embodiment, refer to related descriptions in other embodiments.

It should further be understood that, "first", "second", "third", "fourth", and various numerical numbers in this specification are merely used for distinguishing for ease of description, and are not used to limit the scope of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification usually indicates an "or" relationship between the associated objects.

It should be further understood that, in various embodiments of this application, sequence numbers of the foregoing processes do not mean execution sequences. The execution sequences of the processes should be determined based on functions and internal logic of the processes, and should not be construed as any limitation on the implementation processes of embodiments of this application.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. Persons skilled in the art may use different methods to implement the described functions for each particular application. However, it should not be considered that such implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located at one position, or may be distributed on a plurality of network units. Some or all of the units may be selected based on actual requirements to achieve objectives of the solutions of embodiments.

In addition, functional units in embodiments of this application may be integrated into one processing unit, each of the units may exist alone physically, or two or more units are integrated into one unit.

When the function is implemented in the form of a software functional unit and sold or used as an independent product, the function may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

A sequence of the steps of the method in embodiments of this application may be adjusted, combined, or deleted based on actual requirements.

Modules in the apparatus in embodiments of this application may be combined, divided, and deleted based on actual requirements.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements some technical features thereof, without departing from the scope of the technical solutions of embodiments of this application

## Claims

1. A data processing method, wherein the method is performed by a data processing system, the data processing system comprises a processor and a computing core, and the method comprises:
obtaining, by the processor, metadata of first data and metadata of second data, wherein the second data is obtained by performing a first operation set on the first data, the first operation set comprises at least two first operations, and memory addresses corresponding to elements at adjacent positions in each row of the second data are discontinuous;
identifying, by the processor, the first operation set based on the metadata of the second data, and determining each first operation in the first operation set;
determining, by the processor, a second operation set that matches the first operation set, wherein a second operation that matches each first operation in the first operation set exists in the second operation set; and
obtaining, by the computing core, third data based on the first data and the second operation set, wherein memory addresses corresponding to elements at adjacent positions in each row of the third data are continuous.

2. The method according to claim 1, wherein the identifying, by the processor, the first operation set based on the metadata of the second data, and determining each first operation in the first operation set comprises:
sequentially identifying, by the processor based on a preset priority, the first operations comprised in the first operation set; and
determining, by the processor based on a first operation identified each time, a feature scenario corresponding to the first operation, and sequentially putting feature scenarios into a scenario information stack.

3. The method according to claim 2, wherein the identifying, by the processor based on a preset priority, the first operations comprised in the first operation set comprises:
determining, by the processor, whether the metadata of the second data matches at least one piece of feature information of a to-be-identified first operation, and if the metadata of the second data matches the at least one piece of feature information of the to-be-identified first operation, determining, by the processor, the to-be-identified first operation, wherein the metadata of the second data comprises a shape shape, a stride stride, and a memory offset memory_offset of the second data.

4. The method according to any one of claims 1 to 3, wherein the determining, by the processor, a second operation set that matches the first operation set comprises:
traversing, by the processor, an operator information library, wherein the operator information library comprises a plurality of tensor boost engine TBE operators; and
for each first operation identified from the first operation set, determining, by the processor as a second operation that matches the first operation, an operator that is in the operator information library and that has a same feature as the first operation, and sequentially putting second operations into an operator information stack.

5. The method according to any one of claims 1 to 4, wherein before the obtaining, by the computing core, third data, the method further comprises:
delivering, by the processor, a conversion command to the computing core, wherein the conversion command comprises the second operation set, and the conversion command indicates the computing core to calculate the first data based on the second operation set, to obtain the third data.

6. The method according to any one of claims 1 to 5, wherein the obtaining, by the computing core, third data comprises:
constructing, by the processor, fourth data, wherein metadata of the fourth data is the same as the metadata of the first data, and the fourth data and the first data share a memory; and
sequentially performing, by the computing core, the second operations in the second operation set on the fourth data, to obtain the third data.

7. The method according to any one of claims 1 to 6, wherein the first operation set comprises a transpose transpose operator, a narrow narrow operator, and an expand expand operator.

8. The method according to any one of claims 1 to 7, wherein the data processing system further comprises a host and a chip, the processor is located in the host, and the computing core is located in the chip.

9. The method according to claim 8, wherein the chip comprises at least one of a neural-network processing unit NPU, a graphics processing unit GPU, a tensor processing unit TPU, and a deep learning processing unit DPU.

10. A data processing system, comprising a processor and a computing core, wherein
the processor is configured to: obtain metadata of first data and metadata of second data, wherein the second data is obtained by performing a first operation set on the first data, the first operation set comprises at least two first operations, and memory addresses corresponding to elements at adjacent positions in each row of the second data are discontinuous; identify the first operation set based on the metadata of the second data, and determine each first operation in the first operation set; and determine a second operation set that matches the first operation set, wherein a second operation that matches each first operation in the first operation set exists in the second operation set; and
the computing core is configured to obtain third data based on the first data and the second operation set, wherein memory addresses corresponding to elements at adjacent positions in each row of the third data are continuous.

11. The data processing system according to claim 10, wherein the processor is specifically configured to:
sequentially identify, based on a preset priority, the first operations comprised in the first operation set; and
determine, based on a first operation identified each time, a feature scenario corresponding to the first operation, and sequentially put feature scenarios into a scenario information stack.

12. The data processing system according to claim 10 or 11, wherein the processor is specifically configured to:
determine whether the metadata of the second data matches at least one piece of feature information of a to-be-identified first operation, and if the metadata of the second data matches the at least one piece of feature information of the to-be-identified first operation, determine the to-be-identified first operation, wherein the metadata of the second data comprises a shape shape, a stride stride, and a memory offset memory_offset of the second data.

13. The data processing system according to any one of claims 10 to 12, wherein the processor is specifically configured to:
traverse an operator information library, wherein the operator information library comprises a plurality of TBE operators; and
for each first operation identified from the first operation set, determine, as a second operation that matches the first operation, an operator that is in the operator information library and that has a same feature as the first operation, and sequentially put second operations into an operator information stack.

14. The data processing system according to any one of claims 10 to 13, wherein
the processor is further configured to deliver a conversion command to the computing core, wherein the conversion command comprises the second operation set, and the conversion command indicates the computing core to calculate the first data based on the second operation set, to obtain the third data.

15. The data processing system according to any one of claims 10 to 14, wherein
the processor is further configured to construct fourth data, wherein the fourth data is the same as the metadata of the first data, and the fourth data and the first data share a memory; and
the computing core is further configured to perform the second operation in the second operation set on the fourth data, to obtain the third data.

16. The data processing system according to any one of claims 10 to 15, wherein the first operation set comprises a transpose transpose operator, a narrow narrow operator, and an expand expand operator.

17. The data processing system according to any one of claims 10 to 16, wherein the data processing system further comprises a host and a chip, the processor is located in the host, and the computing core is located in the chip.

18. The system according to claim 17, wherein the chip comprises at least one of a neural-network processing unit NPU, a graphics processing unit GPU, a tensor processing unit TPU, and a deep learning processing unit DPU.

19. A chip, comprising a processor and a computing core, wherein
the processor is configured to: obtain metadata of first data and metadata of second data, wherein the second data is obtained by performing a first operation set on the first data, the first operation set comprises at least two first operations, and memory addresses corresponding to elements at adjacent positions in each row of the second data are discontinuous; identify the first operation set based on the metadata of the second data, and determine each first operation in the first operation set; and determine a second operation set that matches the first operation set, wherein a second operation that matches each first operation in the first operation set exists in the second operation set; and
the computing core is configured to obtain third data based on the first data and the second operation set, wherein memory addresses corresponding to elements at adjacent positions in each row of the third data are continuous.

20. A computing device, comprising:
the data processing system according to any one of claims 1 to 9.

21. A computer-readable storage medium, wherein the computer-readable storage medium stores a computer program, and when the computer program is executed by a processor, the method according to any one of claims 1 to 9 is implemented.

22. A computer program, wherein the computer program comprises instructions, and when the computer program is executed by a processor, the processor is enabled to perform the method according to any one of claims 1 to 9.
